# FASCICULE DE BREVET EUROPEEN

(11) **EP 1 426 843 B1**
(45) Date de publication et mention de la délivrance du brevet: **06.12.2006**
(21) Numéro de dépôt: 03300188.4
(22) Date de dépôt: 30.10.2003
(51) Int. Cl.: G05B 19/418, H04L 12/28

(54) **Réseau local industriel ou domestique**
Häusliches oder industrielles lokales Netzwerk
Local, industrial or domestic network

(30) Priorité: 31.10.2002 FR 0213695
(43) Date de publication de la demande: 09.06.2004
(73) Titulaire: Mediaflow Inc., Portland, Oregon 97219 (US)
(72) Inventeur: Gandar, Marc, 1228 Plan les Ouates (CH)
(74) Mandataire: de Beaumont, Michel

(56) Documents cités:
- US-A- 5 510 775
- US-A- 5 513 324
- GANDAR M ET AL: "A low cost multimedia tool for telemedicine network rapid design" MULTIMEDIA SIGNAL PROCESSING, 1997., IEEE FIRST WORKSHOP ON PRINCETON, NJ, USA 23-25 JUNE 1997, NEW YORK, NY, USA,IEEE, US, 23 juin 1997 (1997-06-23), pages 525-530, XP010233876 ISBN: 0-7803-3780-8

## Description

La présente invention concerne un réseau local de type industriel ou domestique destiné à la commande et/ou au contrôle de divers appareils grâce à un ou plusieurs ordinateurs distribués (ou délocalisés). Un tel réseau est par exemple décrit dans WO 9607259.

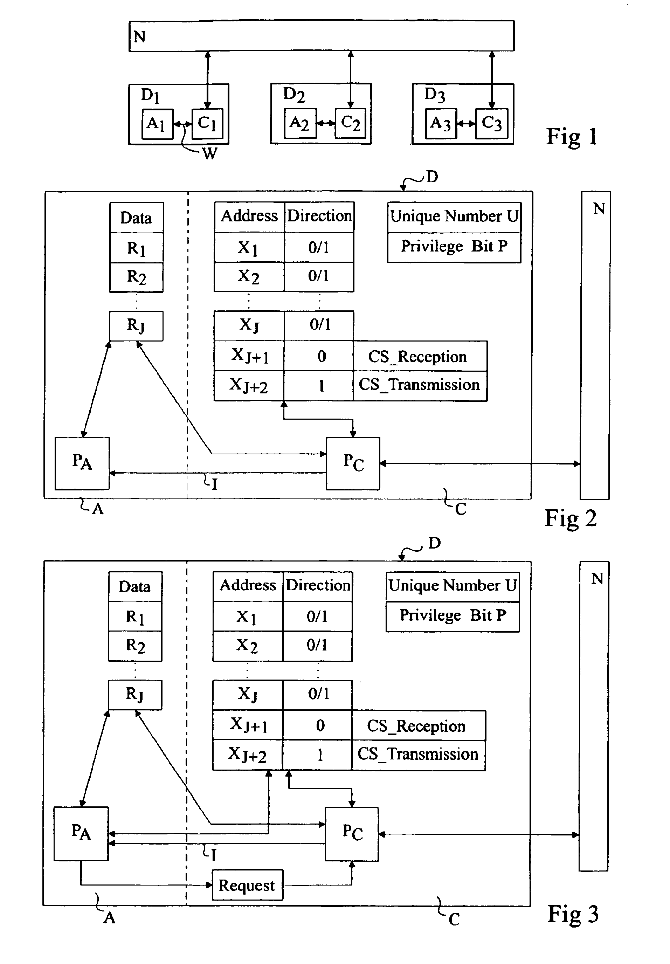

La figure 1 illustre, de façon très schématique, l'architecture d'un réseau local industriel ou domestique. Le réseau N permet la connexion de plusieurs dispositifs, trois dispositifs D₁, D₂, D₃ étant représentés en figure 1. Chaque dispositif est par exemple constitué d'un ordinateur, d'un actionneur commandé par un microprocesseur ou d'un capteur relié à un microprocesseur. Chaque dispositif D₁, D₂, D₃ comprend un système d'application A₁, A₂, A₃ et un circuit de communication C₁, C₂, C₃. Le circuit de communication C₁, C₂, C₃ peut comprendre un microprocesseur ou une logique programmable et assure la réception et l'émission de trames d'information sur le réseau N. Le système d'application A₁, A₂, A₃ comprend un microprocesseur ou une logique programmable qui, sous la commande d'un programme éventuellement modifiable par un utilisateur, réalise un traitement sur les trames d'information émises et reçues par le circuit de communication C₁, C₂, C₃. Le système d'application A₁, A₂, A₃ peut en outre être relié à des actionneurs ou des capteurs. Le système d'application A₁, A₂, A₃ et le circuit de communication C₁, C₂, C₃ peuvent être réalisés par des circuits intégrés distincts reliés par des liaisons filaires W.

De façon générale, le système d'application A₁, A₂, A₃ met en forme les trames d'information envoyées au circuit de communication C₁, C₂, C₃ en fonction de paramètres de fonctionnement du réseau N pour qu'elles puissent être correctement émises sur le réseau N par le circuit de communication C₁, C₂, C₃. Les paramètres de fonctionnement du réseau sont l'ensemble des paramètres qui définissent les flux de données sur le réseau, les priorités entre les dispositifs connectés au réseau, la forme des trames d'information émises sur le réseau, etc. Les trames d'information peuvent également être mises en forme directement par le circuit de communication C₁, C₂, C₃ en fonction des paramètres de fonctionnement du réseau qui sont fixés par le système d'application A₁, A₂, A₃ et qui peuvent être modifiés par celui-ci.

Un inconvénient est qu'en modifiant les éléments qui constituent le système d'application A₁, A₂, A₃ d'un dispositif D₁, D₂, D₃ connecté au réseau N, par exemple en modifiant le programme exécuté par le microprocesseur du système d'application A₁, A₂, A₃, il est possible de modifier les paramètres de fonctionnement de réseau utilisés par le dispositif D₁, D₂, D₃ et donc de dégrader voire d'interrompre le fonctionnement du réseau N. Il peut être alors difficile de déceler l'origine de l'anomalie et de la corriger, le réseau pouvant être définitivement détérioré. De même, lorsqu'un nouveau dispositif est connecté au réseau N, il est supposé que le système d'application du nouveau dispositif dispose de paramètres de fonctionnement de réseau qui soient adaptés au réseau N auquel le dispositif est connecté. Dans le cas où de tels paramètres sont incorrects, le nouveau dispositif connecté au réseau N peut dégrader, voire interrompre, le fonctionnement général du réseau N.

La présente invention vise un échange sécurisé de trames d'information sur un réseau local qui limite les risques de dégradation du fonctionnement du réseau par l'un des dispositifs connectés au réseau.

Dans ce but, elle prévoit un procédé d'échange de trames d'information sur un réseau entre des dispositifs, chaque dispositif comportant un circuit de communication relié à un module de traitement et comportant des adresses, chaque adresse étant associée à un indicateur d'émission ou de réception, un seul dispositif comportant une même adresse associée à un indicateur d'émission, dans lequel chaque adresse est associée à une mémoire contenant une trame d'information pouvant être modifiée et/ou lue par le module de traitement, le module de traitement de chaque dispositif, à l'exception du module de traitement du dispositif maître (M), ne pouvant ni lire ni modifier les adresses et les indicateurs d'émission et/ou de réception, le procédé comportant les étapes consistant à émettre périodiquement par un dispositif maître des adresses ; amener le circuit de communication du dispositif pour lequel l'adresse émise par le dispositif maître est associée à un indicateur d'émission à émettre la trame d'information contenue dans la mémoire associée à ladite adresse et à fournir au module de traitement un identifiant de ladite adresse ; et amener chaque circuit de communication d'un dispositif pour lequel l'adresse émise par le dispositif maître est associée à un indicateur de réception à écrire dans la mémoire associée à ladite adresse ladite trame d'information et à fournir au module de traitement un identifiant de ladite adresse.

Selon un mode de réalisation de l'invention, tous les circuits de communication comportent en outre une première adresse identique pour tous les dispositifs et associée à un indicateur d'émission et une seconde adresse identique pour tous les dispositifs et associée à un indicateur de réception, la connexion d'un nouveau dispositif au réseau comprenant les étapes consistant à émettre périodiquement par le dispositif maître la première adresse ; amener le circuit de communication du nouveau dispositif, à réception de la première adresse, à émettre une trame d'identification ; émettre par le dispositif maître successivement la seconde adresse et une trame de paramétrage définie à partir de la trame d'identification ; amener le circuit de communication du nouveau dispositif, à réception successivement de la seconde adresse et de la trame de paramétrage, à modifier ses adresses et indicateurs de réception et/ou d'émission à partir de la trame de paramétrage.

Selon un mode de réalisation de l'invention, chaque dispositif comprend un numéro d'identification spécifique stocké dans le circuit de communication, la trame d'identification émise par le circuit de communication du nouveau dispositif comprenant le numéro d'identification spécifique dudit nouveau dispositif, la trame de paramétrage émise par le dispositif maître incluant le numéro d'identification spécifique dudit nouveau dispositif.

Selon un mode de réalisation de l'invention, le circuit de communication du nouveau dispositif n'émet aucune donnée tant qu'il n'a pas reçu la première adresse.

Selon un mode de réalisation de l'invention, le circuit de communication de chaque dispositif comprend un indicateur de privilège à une première valeur lorsque le dispositif est susceptible d'émettre des adresses sur le réseau et à une seconde valeur dans le cas contraire, ledit indicateur de privilège étant mis à la première ou à la seconde valeur par le circuit de communication du nouveau dispositif à partir de la trame de paramétrage.

La présente invention prévoit également un dispositif destiné à être relié à un réseau comprenant un circuit de communication et relié à un module de traitement, comprenant une table d'adresses, une table de registres, chaque registre de la table de registre étant associé à une adresse de la table d'adresses et une table de direction comportant un indicateur de direction par adresse, ledit module de traitement étant adapté à lire des trames d'information stockées dans les registres ou écrire des trames d'information dans les registres, ledit module de traitement ne pouvant ni lire ni modifier les adresses et les indicateurs de direction, ledit circuit de communication étant adapté, à réception d'une requête reçue depuis le réseau et correspondant à l'une desdites adresses, à émettre sur le réseau la trame d'information stockée dans le registre associé à ladite adresse si l'indicateur de direction correspondant est d'un premier type déterminé, ou à écrire une trame d'information reçue depuis le réseau dans le registre associé à ladite adresse si l'indicateur de direction correspondant est d'un second type déterminé, et étant adapté à transmettre au module de traitement un identifiant du registre associé à ladite adresse.

Selon un mode de réalisation de l'invention, la table d'adresses comprend une première adresse identique pour tous les dispositifs connectés au réseau, la table de direction comprenant un indicateur de direction associé à ladite première adresse du premier type, le circuit de communication du dispositif étant adapté à émettre sur le réseau à réception de ladite première adresse, lesdites adresses et les indicateurs de direction associés.

Selon un mode de réalisation de l'invention, la table d'adresses comprend une seconde adresse identique pour tous les circuits connectés au réseau, la table de direction comprenant un indicateur de direction associé à ladite seconde adresse du second type, et étant adapté, à la réception successive de la seconde adresse et d'une trame de paramétrage à modifier les adresses et les indicateurs de direction associés à partir de la trame de paramétrage.

Cet objet, ces caractéristiques et avantages, ainsi que d'autres de la présente invention seront exposés en détail dans la description suivante de modes de réalisation particuliers faite à titre non limitatif en relation avec les figures jointes parmi lesquelles :
la figure 1, précédemment décrite, illustre un exemple de réseau local classique ;
la figure 2 représente les paramètres de fonctionnement caractéristiques utilisés par un dispositif esclave selon l'invention connecté au réseau ;
la figure 3 représente les paramètres de fonctionnement caractéristiques utilisés par un dispositif maître selon l'invention connecté au réseau ; et
la figure 4 représente, de façon schématique, un exemple de réalisation du procédé d'échange de trames d'information entre un dispositif maître du réseau et un nouveau dispositif connecté au réseau.

La présente invention consiste pour la majorité des dispositifs connectés au réseau et appelés dispositifs esclaves à limiter les données pouvant être échangées entre le système d'application et le circuit de communication du dispositif de façon que le système d'application n'ait pas accès aux paramètres de fonctionnement du réseau utilisés par le circuit de communication pour échanger des trames d'information sur le réseau. Le système d'application d'un dispositif esclave ne peut donc pas modifier les paramètres de fonctionnement du réseau quelles que soient les modifications apportées au système d'application, par exemple au niveau du programme exécuté par le microprocesseur du système d'application. Un seul dispositif connecté au réseau et appelé dispositif maître a la possibilité de modifier les paramètres de fonctionnement du réseau utilisés par les dispositifs esclaves.

La figure 2 représente un exemple de réalisation d'un dispositif esclave D selon l'invention comprenant un système d'application A relié à un circuit de communication C, le circuit de communication C étant adapté à échanger des trames d'information sur un réseau N. Selon le type de réseau N, les dispositifs D peuvent tous être connectés à un bus ou être connectés entre eux par des liaisons point par point. Le circuit de communication C comprend un module de communication P_{C} adapté à échanger des trames d'information avec le réseau N en fonction de paramètres stockés dans des mémoires. Le système d'application A comprend un module de traitement P_{A} adapté à recevoir des données fournies par le module de communication P_{C} et effectuer des traitements sur des données stockées en mémoire, par exemple par exécution d'un programme.

Le circuit de communication C comprend une table d'adresses (Address) dans laquelle sont stockées des adresses X₁ à X_{J+2}, où J est le nombre de canaux de communication simultanés qu'un dispositif D peut avoir avec d'autres dispositifs connectés au réseau N. Chaque adresse X₁ à X_{J} est associée à un seul canal de communication. La valeur J varie en fonction du type de dispositif D connecté au réseau N. La table d'adresses peut comporter seulement certaines adresses parmi les adresses X₁ à X_{J} et les cellules de la table d'adresses non utilisées par le dispositif D sont placées à une valeur arbitraire d'inhibition. Les adresses X_{J+1} et X_{J+2} sont toujours présentes pour tous les dispositifs D connectés au réseau N. Les adresses X₁ à X_{J+2} peuvent correspondre à des données binaires par exemple de 16 bits. A l'adresse X_{J+1} correspond une trame d'information particulière, appelée trame de paramétrage (CS_Reception) qui est stockée au niveau du circuit de communication C. A l'adresse X_{J+2} correspond une trame d'information particulière appelée trame d'identification (CS_Transmission) stockée au niveau du circuit de communication. Le circuit de communication comprend aussi une table de direction (Direction) dans laquelle sont stockés des indicateurs de direction, chaque indicateur de direction correspondant à un seul bit. Chaque adresse X₁ à X_{J+2} est associée à un indicateur de direction qui est à 1 ou à 0 pour les adresses X₁ à X_{J}, à 0 pour l'adresse X_{J+1} et à 1 pour l'adresse X_{J+2}. Pour une adresse X₁ à X_{J} donnée, un seul dispositif du réseau comporte un indicateur de direction associée à ladite adresse à 1. Un numéro d'identification U (Unique Number U), spécifique à chaque dispositif D pouvant être connecté au réseau N, et un indicateur de privilège P (Privilege Bit P) sont stockés dans une mémoire du circuit de communication C. A titre d'exemple, le numéro d'identification spécifique U comporte 63 bits et l'indicateur de privilège un seul bit.

Le système d'application A comprend une table (Data) de registres R₁ à R_{J} dans lesquels sont stockées des données pouvant être de taille variable, chaque registre R₁ à R_{J} étant associé à une adresse X₁ à X_{J} de la table d'adresses.

Les données stockées dans les registres R₁ à R_{J} peuvent être lues ou modifiées par le module de communication P_{C} du circuit de communication C et par le module de traitement P_{A} du système d'application A. Le module de communication P_{C} peut, dans certaines conditions, modifier les différentes adresses X₁ à X_{J}, les indicateurs de direction, et l'indicateur de privilège P. Le module de traitement P_{A} ne peut ni lire, ni modifier les adresses X₁ à X_{J}, les indicateurs de direction, et l'indicateur de privilège P. Le numéro d'identification spécifique U est une caractéristique du dispositif D et ne peut être modifié ni par le module de communication P_{C} ni par le module de traitement P_{A}. De même, les adresses X_{J+1} et X_{J+2} sont des caractéristiques du dispositif D et ne peuvent être modifiées ni par le module de communication P_{C} ni par le module de traitement P_{A}. Le module de communication P_{C} est adapté à transmettre au module de traitement P_{A} un identifiant I indiquant l'un des registres R₁ à R_{J} de la table de registres.

La figure 3 représente la structure du dispositif maître M qui est similaire à celle représentée en figure 2. Toutefois, à la différence de tous les dispositifs esclaves, le module de traitement P_{A} du système d'application A du dispositif maître M peut modifier directement les tables d'adresses (Address) et de direction (Direction) stockées au niveau du circuit de communication C du dispositif maître M. Le circuit de communication C comporte en outre un registre (Request) où sont successivement écrites par le système d'application A des requêtes Q à émettre sur le réseau N.

Le procédé selon l'invention d'échange de trames d'information sur le réseau N est le suivant. A un moment donné, seul le dispositif maître M a la possibilité de transmettre des requêtes Q sur le réseau N. Les requêtes Q sont reçues par tous les dispositifs esclaves D connectés au réseau N. A partir d'une requête Q reçue, chaque module de communication P_{C} peut déterminer une même adresse X_{K} parmi les adresses X₁ à X_{J+2}. En particulier, la requête Q peut être égale à l'adresse X_{K}.

Pour chaque dispositif esclave, si l'adresse X_{K} déterminée à partir d'une requête reçue correspond à l'une des adresses X₁ à X_{J} stockées, le module de communication P_{C} détermine si l'indicateur de direction associé à l'adresse X_{K} est à 0 ou à 1.

Si l'indicateur de direction est à 1, le module de communication P_{C} lit la trame d'information stockée dans le registre de données R_{K} associé à l'adresse X_{K} et l'émet sur le réseau N. Le module de communication P_{C} envoie alors au module de traitement P_{A} l'identifiant I associé au registre R_{K} lu pour lui indiquer que la trame d'information stockée dans le registre R_{K} a été émise sur le réseau N.

Si l'indicateur de direction associé à l'adresse X_{K} est à 0, le circuit de communication C attend de recevoir une trame d'information issue du réseau N. Selon le protocole d'échange utilisé par le réseau, la trame d'information attendue peut correspondre à la première trame d'information reçue par le dispositif D après réception de la requête ou bien à une trame ultérieure. Le module de communication P_{C} mémorise alors la trame d'information reçue dans le registre de données R_{K} associé à l'adresse X_{K} et transmet alors au module de traitement P_{A} l'identifiant I associé au registre R_{K} pour indiquer au système d'application A qu'une nouvelle trame d'information a été stockée dans le registre R_{K} correspondant à l'identifiant I.

Le dispositif maître M peut également transmettre des trames d'informations sur le réseau. En effet, lors de l'émission d'une requête Q par le dispositif maître M, le dispositif maître M, comme les dispositifs esclaves, reçoit la requête Q qu'il vient d'émettre. Il suffit alors que l'indicateur de direction associé à l'adresse de la requête émise soit à 1 pour que le dispositif maître M émette alors la trame d'information stockée dans le registre de données associé à l'adresse de la requête.

En fonction des tables d'adresses et de direction des dispositifs connectés au réseau, des flux de données peuvent alors être établis entre les dispositifs. Les tables d'adresses et de direction constituent donc les paramètres de fonctionnement du réseau selon l'invention.

Pour les dispositifs esclaves connectés au réseau, le module de traitement P_{A} du système d'application A de chaque dispositif esclave n'a accès ni aux tables d'adresses et de direction, ni à l'indicateur de privilège du circuit de communication C. Le système d'application ne peut donc pas modifier les paramètres de fonctionnement du réseau et donc perturber le fonctionnement du réseau N. Seul le module de traitement du système d'application du dispositif maître peut directement modifier les tables stockées dans le circuit de communication du dispositif maître. Toutefois, le fonctionnement du dispositif maître étant généralement bien connu, la cause d'un mauvais fonctionnement du réseau peut facilement être diagnostiquée.

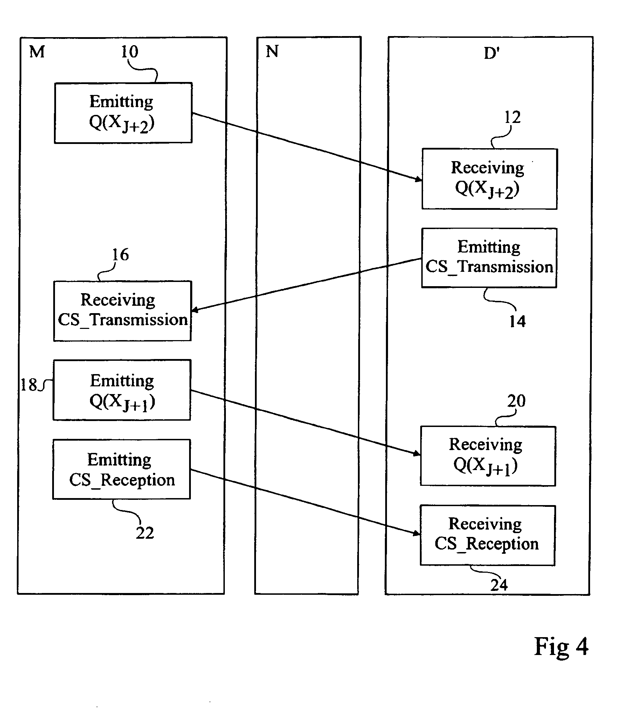

La figure 4 représente un exemple d'échanges successifs de trames d'information sur le réseau N entre un dispositif maître M et un nouveau dispositif D' connecté au réseau N.

Le nouveau dispositif D' connecté au réseau N a l'architecture représenté en figure 2. Il comprend donc une table d'adresses, une table de direction, un numéro d'identification spécifique U, et un indicateur de privilège P. Selon le procédé de l'invention, le nouveau dispositif D' connecté au réseau N n'émet aucune trame d'information tant qu'il n'a pas reçu une requête appropriée émise par le dispositif maître M.

Pour tous les dispositifs connectés au réseau N, les indicateurs de direction associés aux adresses X_{J+1} et X_{J+2} sont respectivement à 0 et à 1. Les valeurs des adresses X_{J+1} et X_{J+2} sont par exemple FFFF et FFFE. La trame d'identification CS_Transmission associée à l'adresse X_{J+2} comprend notamment l'ensemble des adresses X₁ à X_{J}, les indicateurs de direction associés aux adresses X₁ à X_{J}, le numéro d'identification spécifique U et l'indicateur de privilège P.

A l'étape 10, le dispositif maître M émet sur le réseau N une requête Q(X_{J+2}) associée à l'adresse X_{J+2}. Une telle requête peut être émise de façon périodique.

A l'étape 12, le nouveau dispositif D' et tous les autres dispositifs déjà connectés au réseau N reçoivent la requête Q(X_{J+2}).

A l'étape 14, l'indicateur de direction associé à l'adresse X_{J+2} étant à 1, le nouveau dispositif D' émet la trame d'identification CS_Transmission associée à l'adresse X_{J+2}.

A l'étape 16, le dispositif maître M reçoit la trame CS_Transmission. La connexion d'un nouveau dispositif D' au réseau N est donc connue du dispositif maître M qui détermine à partir de la trame CS_Transmission les tables d'adresses et de direction et la valeur de l'indicateur de privilège P du nouveau dispositif D'.

A l'étape 18, le dispositif maître M émet une requête Q(X_{J+1}) associée à l'adresse X_{J+1}.

A l'étape 20, le nouveau dispositif D' reçoit la requête Q(X_{J+1}). L'indicateur de direction associé à l'adresse X_{J+1} étant à zéro, le nouveau dispositif D' se met en attente d'une trame d'information issue du réseau N.

A l'étape 22, le dispositif maître M émet une trame de paramétrage CS_Reception qui comprend une table d'adresse X₁ à X_{J}, une table de direction, une valeur d'indicateur de privilège P et qui rappelle le numéro d'identification spécifique U associé au nouveau dispositif D'. Les tables et l'indicateur de privilège peuvent être modifiés par rapport aux valeurs d'origine fournies par la trame d'identification CS_Transmission.

A l'étape 24, le nouveau dispositif D' et tous les dispositifs déjà connectés au réseau reçoivent la trame de paramétrage CS_Reception. Seul le module de communication P_{C} du nouveau dispositif D' reconnaît le numéro d'identification spécifique U présent dans la trame CS_Reception. Les tables d'adresses et de direction et l'indicateur de privilège de ce nouveau dispositif sont alors modifiés en fonction de la trame CS_Reception reçue. Tous les autres dispositifs déjà connectés au réseau et qui reçoivent également la trame CS_Reception n'effectuent aucune action puisqu'ils ne reconnaissent pas le numéro d'identification spécifique présent dans la trame CS_Reception comme étant le leur. Le nouveau dispositif D' inhibe alors l'adresse X_{J+2} de façon à ne plus transmettre de trame d'identification CS_Transmission s'il reçoit ultérieurement une requête Q(X_{J+2}) associée à l'adresse X_{J+2}. Le nouveau dispositif D' peut alors fonctionner de façon normale et émettre sur le réseau N des trames d'information à réception de requêtes du dispositif maître M. La présente invention permet de configurer un seul nouveau dispositif D' à la fois. En effet, la durée de la configuration étant très courte, de l'ordre de la microseconde, il est en pratique impossible, lors d'une manipulation, de brancher deux nouveaux dispositifs simultanément sur le réseau.

L'indicateur de privilège P d'un nouveau dispositif D' connecté au réseau est à 1 lorsque le nouveau dispositif D' a la possibilité de se comporter, sous certaines conditions, comme un dispositif maître, c'est-à-dire d'émettre des requêtes sur le réseau N. Il peut être utile qu'un dispositif esclave ait la possibilité de devenir un dispositif maître notamment pour pallier une déficience du dispositif maître actif. Lorsqu'à l'étape 16, le dispositif maître M reçoit la trame d'identification CS_Transmission et détermine la valeur de l'indicateur de privilège P du nouveau dispositif D', il peut décider de mettre l'indicateur de privilège à 0 s'il considère que le nouveau dispositif D' ne doit pas pouvoir fonctionner en tant que dispositif maître ou de laisser l'indicateur de privilège à 1 s'il considère que, dans certains cas de fonctionnement, le nouveau dispositif D' pourrait être amené à fonctionner en tant que dispositif maître.

La présente invention comprend de nombreux avantages.

Premièrement, elle permet à des systèmes d'application de dispositifs d'échanger des données sur un réseau sans avoir la connaissance des paramètres de fonctionnement du réseau. En effet, les paramètres de fonctionnement du réseau qui définissent les flux de données entre les dispositifs connectés au réseau sont transmis par le dispositif maître à chaque nouveau dispositif connecté au réseau.

Deuxièmement, elle permet de déceler rapidement qu'un nouveau dispositif connecté au réseau fonctionne de façon "anormale" dans le sens où le nouveau dispositif ne suit pas le procédé d'échanges de données selon la présente invention. En effet, un nouveau dispositif selon l'invention connecté au réseau n'émet aucune trame d'information tant qu'il n'a pas reçu de requête appropriée. Un nouveau dispositif fonctionnant "anormalement" connecté au réseau émettra probablement sur le réseau dès sa connexion des requêtes ou des trames d'information. Il y a alors immédiatement un conflit entre le dispositif maître et le nouveau dispositif. L'émission sur le réseau de requêtes ou de trames d'information indésirables provoque très rapidement une perturbation du fonctionnement des autres dispositifs connectés au réseau. Une telle perturbation peut généralement être rapidement constatée par un observateur extérieur et le nouveau dispositif peut alors être retiré du réseau.

Troisièmement, un nouveau dispositif connecté au réseau doit nécessairement signaler sa présence en transmettant, suite à une requête du dispositif maître, la trame d'identification CS_Transmission. Le dispositif maître peut alors éventuellement modifier les tables d'adresses de tous les autres dispositifs déjà connectés au réseau pour tenir compte de la présence du nouveau dispositif connecté au réseau. Le procédé selon l'invention permet donc d'éviter qu'un nouveau dispositif connecté au réseau soit "dormant", c'est-à-dire qu'il ne transmette aucune trame d'information sur le réseau après sa connexion. Le présent procédé prévient donc du "réveil" d'un tel dispositif "dormant" après une durée indéterminée, un tel réveil pouvant être à l'origine d'une dégradation du fonctionnement du réseau dont la cause pourrait alors être difficile à déterminer.

Quatrièmement, les requêtes transmises par le dispositif maître sur le réseau peuvent être constituées des simples adresses X₁ à X_{J+2} qui sont par exemple composées de 16 bits. On limite ainsi la taille des données transmises sur le réseau qui sont nécessaires au bon fonctionnement du réseau mais qui ne contiennent donc pas d'informations "utiles", c'est-à-dire utilisées par les systèmes d'application des dispositifs connectés au réseau.

Cinquièmement, le module de communication du circuit de communication du dispositif peut être mis en oeuvre par une architecture simple de portes logiques sans nécessiter de microprocesseur ni de mémoire.

Sixièmement, elle permet de rassembler les paramètres de fonctionnement du réseau en un endroit unique, par exemple le dispositif maître, et permet ainsi l'administration globale du réseau depuis un point central.

## Revendications

1. Procédé d'échange de trames d'information sur un réseau (N) entre des dispositifs (D), chaque dispositif comportant un circuit de communication (C) relié à un module de traitement (P_{A}) et comportant des adresses (X₁,...,X_{J}), chaque adresse étant associée à un indicateur d'émission ou de réception, un seul dispositif comportant une même adresse associée à un indicateur d'émission, **caractérisé en ce que** chaque adresse est associée à une mémoire contenant une trame d'information pouvant être modifiée et/ou lue par le module de traitement, le module de traitement de chaque dispositif, à l'exception du module de traitement d'un dispositif maître (M), ne pouvant ni lire ni modifier les adresses et les indicateurs d'émission et/ou de réception, le procédé comportant les étapes suivantes :
émettre périodiquement par le dispositif maître (M) des adresses ;
amener le circuit de communication du dispositif pour lequel l'adresse émise par le dispositif maître est associée à un indicateur d'émission à émettre la trame d'information contenue dans la mémoire associée à ladite adresse et à fournir au module de traitement un identifiant (I) de ladite adresse ; et
amener chaque circuit de communication d'un dispositif pour lequel l'adresse émise par le dispositif maître est associée à un indicateur de réception à écrire dans la mémoire associée à ladite adresse ladite trame d'information et à fournir au module de traitement un identifiant (I) de ladite adresse.

2. Procédé selon la revendication 1, dans lequel tous les circuits de communication (C) comportent en outre une première adresse (X_{J+2}) identique pour tous les dispositifs (D) et associée à un indicateur d'émission et une seconde adresse (X_{J+1}) identique pour tous les dispositifs et associée à un indicateur de réception, la connexion d'un nouveau dispositif (D') au réseau (N) comprenant les étapes suivantes :
émettre périodiquement par le dispositif maître (M) la première adresse ;
amener le circuit de communication (C) du nouveau dispositif, à réception de la première adresse, à émettre une trame d'identification (CS_Transmission) ;
émettre par le dispositif maître successivement la seconde adresse et une trame de paramétrage (CS_Reception) définie à partir de la trame d'identification ;
amener le circuit de communication du nouveau dispositif, à réception successivement de la seconde adresse et de la trame de paramétrage, à modifier ses adresses (X₁,...,X_{J}) et indicateurs de réception et/ou d'émission à partir de la trame de paramétrage.

3. Procédé selon la revendication 2, dans lequel chaque dispositif (D) comprend un numéro d'identification spécifique (U) stocké dans le circuit de communication (C), la trame d'identification (CS_Transmission) émise par le circuit de communication du nouveau dispositif (D') comprenant le numéro d'identification spécifique dudit nouveau dispositif, la trame de paramétrage (CS_Reception) émise par le dispositif maître (M) incluant le numéro d'identification spécifique dudit nouveau dispositif.

4. Procédé selon la revendication 2, dans lequel le circuit de communication (C) du nouveau dispositif (D') n'émet aucune donnée tant qu'il n'a pas reçu la première adresse (X_{J+2}).

5. Procédé selon la revendication 2, dans lequel le circuit de communication (C) de chaque dispositif (D) comprend un indicateur de privilège (Privilege Bit P) à une première valeur lorsque le dispositif est susceptible d'émettre des adresses (X₁,...,X_{N}) sur le réseau (N) et à une seconde valeur dans le cas contraire, ledit indicateur de privilège étant mis à la première ou à la seconde valeur par le circuit de communication du nouveau dispositif (D') à partir de la trame de paramétrage (CS_Reception).

6. Dispositif (D) destiné à être relié à un réseau (N) comprenant un circuit de communication (C) et relié à un module de traitement (P_{A}), **caractérisé en ce qu'**il comprend une table d'adresses (Address), une table de registres (Data), chaque registre (R₁,...,R_{J}) de la table de registre étant associé à une adresse (X₁,...,X_{J}) de la table d'adresses et une table de direction (Direction) comportant un indicateur de direction par adresse, ledit module de traitement étant adapté à lire des trames d'information stockées dans les registres ou écrire des trames d'information dans les registres, ledit module de traitement ne pouvant ni lire ni modifier les adresses et les indicateurs de direction, ledit circuit de communication étant adapté, à réception d'une requête reçue depuis le réseau et correspondant à l'une desdites adresses, à émettre sur le réseau la trame d'information stockée dans le registre associé à ladite adresse si l'indicateur de direction correspondant est d'un premier type déterminé, ou à écrire une trame d'information reçue depuis le réseau dans le registre associé à ladite adresse si l'indicateur de direction correspondant est d'un second type déterminé, et étant adapté à transmettre au module de traitement un identifiant du registre associé à ladite adresse.

7. Dispositif (D) selon la revendication 6, dans lequel la table d'adresses (Address) comprend une première adresse (X_{J+2}) identique pour tous les dispositifs connectés au réseau (N), la table de direction (Direction) comprenant un indicateur de direction associé à ladite première adresse du premier type, le circuit de communication (C) du dispositif étant adapté à émettre sur le réseau (N) à réception de ladite première adresse, lesdites adresses (X₁,...,X_{J}) et les indicateurs de direction associés.

8. Dispositif (D) selon la revendication 7, dans lequel la table d'adresses (Address) comprend une seconde adresse (X_{J+1}) identique pour tous les circuits connectés au réseau (N), la table de direction (Direction) comprenant un indicateur de direction associé à ladite seconde adresse du second type, et étant adapté, à la réception successive de la seconde adresse et d'une trame de paramétrage (CS_Reception) à modifier les adresses (X₁,...,X_{J}) et les indicateurs de direction associés à partir de la trame de paramétrage.

## Claims

1. A method for exchanging information frames over a network (N) between devices (D), each device comprising a communication circuit (C) connected to a processing unit (P_{A}) and comprising addresses (X₁, ..., X_{J}), each address being associated with a transmission or reception indicator, a single device comprising a same address associated with a transmission indicator, wherein each address is associated with a memory containing an information frame that can be modified and/or read by the processing unit, the processing unit of each device, except for the processing unit of a master device (M), being capable neither to read nor to modify the addresses and the transmission and/or reception indicators, the method comprising the steps of:
having the master device (M) periodically transmit addresses;
having the communication circuit of the device for which the address transmitted by the master device is associated with a transmission indicator transmit the information frame contained in the memory associated with said address and provide the processing unit with an identifier (I) of said address; and
having each communication circuit of a device for which the address transmitted by the master device is associated with a reception indicator write into the memory associated with said address of said information frame and provide the processing unit with an identifier (I) of said address.

2. The method of claim 1, wherein all communication circuits (C) further comprise a first address (X_{J+2}) identical for all devices (D) and associated with a transmission indicator and a second address (X_{J+1}) identical for all devices and associated with a reception indicator, the connection of a new device (D') to the network (N) comprising the steps of:
having the master device (M) periodically transmit the first address;
having the communication circuit (C) of the new device, upon reception of the first address, transmit an identification frame (CS_Transmission);
having the master device successively transmit the second address and a parameterizing frame (CS_Reception) defined based on the identification frame;
having the communication circuit of the new device, upon successive reception of the second address and of the parameterizing frame, modify its addresses (X₁, ..., X_{J}) and reception and/or transmission indicators based on the parameterizing frame.

3. The method of claim 2, wherein each device (D) comprises a specific identification number (U) stored in the communication circuit (C), the identification frame (CS_Transmission) transmitted by the communication circuit of the new device (D') comprising the specific identification number of said new device, the parameterizing frame (CS_Reception) transmitted by the master device (M) comprising the specific identification number of said new device.

4. The method of claim 2, wherein the communication circuit (C) of the new device (D') transmits no data as long as it has not received the first address (X_{J+2}).

5. The method of claim 2, wherein the communication circuit (C) of each device (D) comprises a privilege indicator (Privilege Bit P) at a first value when the device is likely to transmit addresses (X₁, ..., X_{N}) over the network (N) and at a second value otherwise, said privilege indicator being set to the first or to the second value by the communication circuit of the new device (D') based on the parameterizing frame (CS_Reception).

6. A device (D) intended to be connected to a network (N), comprising a communication circuit (C) and connected to a processing unit (P_{A}), comprising an address table (Address), a register table (Data), each register (R₁, ..., R_{J}) in the register table being associated with an address (X₁, ... X_{J}) in the address table and a direction table comprising one direction indicator per address, said processing unit being capable of reading information frames stored into the registers or writing information frames in the registers, said processing unit not being capable of reading or modifying the addresses and the direction indicators, said communication circuit being capable, upon reception of a request received from the network and corresponding to one of said addresses, of transmitting over the network the information frame stored in the register associated with said address if the corresponding direction indicator is of a first determined type, or of writing an information frame received from the network into the register associated with said address if the corresponding direction indicator is of a second determined type, and being capable of transmitting to the processing unit an identifier of the register associated with said address.

7. The device (D) of claim 6, wherein the address table (Address) comprises a first address (X_{J+2}) identical for all the devices connected to the network (N), the direction table (Direction) comprising a direction indicator associated with said first address of the first type, the communication circuit (C) of the device being adapted to transmitting said addresses (X₁, ... X_{J}) and the associated direction indicators over the network (N) upon reception of said first address.

8. The device (D) of claim 7, wherein the address table (Address) comprises a second address (X_{J+1}) identical for all circuits connected to the network (N), the direction table (Direction) comprising a direction indicator associated with said second address of the second type, and being capable, upon successive reception of the second address and of a parameterizing frame (CS_Reception), of modifying the addresses (X₁, ..., X_{J}) and the associated direction indicators based on the parameterizing frame.

## Patentansprüche

1. Verfahren zum Austausch von informationsrahmen über ein Netzwerk (N) zwischen Vorrichtungen (D), wobei jede Vorrichtung folgendes aufweist: eine Kommunikations- oder Nachrichtenschaltung (C) verbunden mit einer Prozessor-Einheit (P_{A}) und zwar Adressen(X₁, ..., X_{J}) aufweisend, wobei jede Adresse mit einem Sende- oder Empfangsindikator assoziiert ist, wobei eine einzige Vorrichtung eine gleiche Adresse assoziiert, mit einem Sendeindikator aufweist, wobei jede Adresse mit einem Speicher assoziiert ist, der einen Informationsrahmen enthält, der durch eine Prozessoreinheit modifiziert und/oder gelesen werden kann, wobei die Prozessoreinheit von jeder Vorrichtung mit Ausnahme der Prozessoreinheit für eine Haupt- oder Mastervorrichtung (M) in der Lage ist, die Adressen und die Sende- und/oder Empfangsindikatoren weder zu lesen noch zu modifizieren, wobei das Verfahren die folgenden Schritte aufweist:
Vorsehen, dass die Mastervorrichtung (M) periodisch Adressen sendet;
Vorsehen, dass die Kommunikationsschaltung der Vorrichtung für die die Adresse durch die Mastervorrichtung mit einem Sendeindikator assoziiert ist, den Informationsrahmen sendet, der in dem Speicher enthalten ist, der assoziiert ist mit der erwähnten Adresse und Beliefern der Prozessoreinheit mit einem Identifizierer (I) der Adresse; und
Vorsehen, dass jede Kommunikationseinheit einer Vorrichtung für die, die durch die Niastervorrichtung gesendete Adresse, mit einem Empfangsindikator assoziiert ist, in den Speicher assoziiert mit der erwähnten Adresse des erwähnten Informationsrahmens einschreibt und Beliefern der Prozessoreinheit mit einem Identifizierer (I) der Adresse.

2. Verfahren nach Anspruch 1, wobei sämtliche Kommunikationsschaltungen (C) ferner eine erste Adresse (X_{J+2}) aufweist, und zwar identisch für alle Vorrichtung (D) und assoziiert mit einem Sendeindikator, und wobei sämtliche Kommunikationsschaltungen (C) ferner eine zweite Adresse (X_{J+1}) aufweisen, identisch für alle Vorrichtungen und assoziiert mit einem Empfangsindikator, wobei die Verbindung einer neuen Vorrichtung (D') mit dem Netzwerk (N) die folgenden Schritte vorsieht:
Vorsehen, dass die Mastervorrichtung (M) periodisch die erste Adresse überträgt bzw. sendet;
Vorsehen, dass die Kommunikationsschaltung (C) der neuen Vorrichtung bei Empfang der ersten Adresse einen Identifikationsrahmen (CS_Sendung) überträgt oder sendet;
Vorsehen, dass die Mastervorrichtung sukzessiv die zweite Adresse und einen parameterisierenden Rahmen (CS_Empfang) definiert, basierend auf den Identifikationsrahmen überträgt oder sendet;
Vorsehen, dass die Kommunikationsschaltung der neuen Vorrichtung bei sukzessivem Empfang der zweiten Adresse und des parameterisierenden Rahmens ihre Adressen (X₁, ..., X_{J}) und die Empfangs- und/oder Sendeindikatoren modifiziert und zwar basierend auf dem parameterisierenden Rahmen

3. Vorrichtung nach Anspruch 2, wobei jede Vorrichtung (D) eine spezielle Identifikationszahl (U) gespeichert in der Kommunikationsschaltung (C) aufweist, wobei der Identifikationsrahmen (CS_Sendung bzw. Übertragung) gesendet durch die Kommunikationsschaltung der neuen Vorrichtung (D') die spezielle Identifikationszahl der erwähnten neuen Vorrichtung aufweist, wobei der parameterisierende Rahmen (CS_Empfang) gesendet durch die Mastervorrichtung (M) die spezielle Identifikationszahl der neuen Vorrichtung aufweist.

4. Verfahren nach Anspruch 2, wobei die Kommunikationsschaltung (C) der neuen Vorrichtung (D') keine Daten überträgt bzw, sendet, solange sie nicht die erste Adresse (X_{J+2}) empfangen hat,

5. Verfahren nach Anspruch 2, wobei die Kommunikationsschaltung (C) jeder Vorrichtung (D) einen Privilegindikator (Privileg Bit P) aufweist und zwar auf einem ersten Wert, dann, wenn die Vorrichtung wahrscheinlicherweise Adressen (X₁, ..., X_{N}) über das Netzwerk (N) sendet und ansonsten auf einem zweiten Wert wobei der erwähnte Privilegindikator eingestellt ist auf den ersten oder zweiten Wert durch die Kommunikationsschaltung der neuen Vorrichtung (D') basierend auf dem parameterisierenden Rahmen (CS_Empfang).

6. Eine zur Verbindung mit einem Netzwerk (N) vorgesehene Vorrichtung (D) die eine Kommunikationsschaltung (C) aufweist und zwar verbunden mit einer Verarbeitungs- oder Prozessoreinheit (P_{A}) und zwar folgendes aufweisend: eine Adressentabelle (Adresse), eine Registertabelle (Daten), wobei jedes Register (R₁, ..., R_{J}), in der Registertabelle mit einer Adresse (X₁, ..., X_{J}) in der Adressentabelle assoziiert ist und wobei eine Richtungstabelle einen Richtungsindikator pro Adresse aufweist, wobei die Prozessoreinheit in der Lage ist, Informationsrahmen zu lesen, die in den Registern gespeichert sind oder Informationsrahmen in die Register zu schreiben, wobei die Prozessoreinheit nicht in der Lage ist die Adressen und die Richtungsindikatoren zu lesen oder zu modifizieren, und wobei die Kommunikationsschaltung ferner in der Lage ist, nach Empfang einer Anforderung empfangen von dem Netzwerk und entsprechend einer der erwähnten Adressen, über das Netzwerk den Informationswert zu übertragen, der in dem Register assoziiert mit der erwähnten Adresse gespeichert ist, und zwar dann, wenn der entsprechende Richtuncgsindikator zu einem ersten vorbestimmten Typ gehört oder um einen Informationsrahmen empfangen von dem Netzuverk in das Register einzuschreiben und zwar assoziiert mit der erwähnten Adresse dann, wenn der entsprechende Richtungsindikator zu einem zweiten vorbestimmten Typ gehört, wobei die Kommunikationsschaltung ferner in der Lage ist zur Prozessoreinheit einen Identifizierer des Registers assoziiert mit der erwähnten Adresse zu übertragen oder zu senden.

7. Vorrichtung (D) nach Anspruch 6, wobei die Adressentabelle (Adresse) eine erste Adresse (X_{J+2}) identisch für sämtliche Vorrichtungen verbunden mit dem Netzwerk (N) aufweist, wobei die Richtungstabelle (Richtung) einen Richtungsindikator aufweist, und zwar assoziiert mit der ersten Adresse des ersten Typs, wobei ferner die Kommunikationsschaltung (C) der Vorrichtung geeignet ist, um die erwähnten Adressen (X₁, ..., X_{J}) und die assoziierten Richtungsindikatoren beim Empfang der erwähnten erstert Adresse über das Netzwerk (N) zu senden.

8. Vorrichtung (D) nach Anspruch 7, wobei die Adressentabelle (Adresse) eine zweite Adresse (X_{J+1}) aufweist, und zwar identisch für sämtliche Schaltungen verbunden mit Netzwerk (N), wobei ferner die Richtungstabelle (Richtung) einen Richtungsindikator aufweist, und zwar assoziiert mit der erwähnten zweiten Adresse des zweiten Typs und wobei diese ferner in der Lage ist, bei aufeinanderfolgenden Empfang der zweiten Adresse und eines Parameterisierungsrahmens (CS_Empfang) die Adressen (X₁, ..., X_{J}) und die assoziierten Richtungsindikatoren zu modifizieren und zwar basierend auf dem Parameterisierungsrahmen.
